# FASCICULE DE BREVET EUROPEEN

(11) **EP 2 744 263 B1**
(45) Date de publication et mention de la délivrance du brevet: **28.06.2017**
(21) Numéro de dépôt: 13196692.1
(22) Date de dépôt: 11.12.2013
(51) Int. Cl.: H04W 28/24, H04W 72/08, H04W 76/02, H04W 84/18

(54) **Procédé et système pour l'etablissement et le maintien de liaison large bande**
Verfahren und System zur Einrichtung und Beibehaltung einer Breitbandverbindung
Method and system for establishing and maintaining a broadband link

(30) Priorité: 14.12.2012 FR 1203407
(43) Date de publication de la demande: 18.06.2014
(73) Titulaire: Thales, 92400 Courbevoie (FR)
(72) Inventeur: Lamy-Bergot, Catherine, 92622 GENNEVILLIERS Cedex (FR); Chantelouve, Jean-Baptiste, 92622 GENNEVILLIERS Cedex (FR)
(74) Mandataire: Dudouit, Isabelle

(56) Documents cités:
- EP-A1- 2 418 892
- EP-A2- 1 507 371
- WO-A1-2005/060142
- WO-A2-2009/101592
- CN-A- 101 626 584
- "MIL-STD-188-110C. Department of Defense Interface Standard. Interoperability and performances standards for data modems", , 23 septembre 2011 (2011-09-23), pages 1-239, XP055082317, Extrait de l'Internet: URL:http://www.everyspec.com/MIL-STD/MIL-S TD-0100-0299/MIL-STD-188_110C_CHG_NOTICE-1 _47598/ [extrait le 2013-10-02]
- "MIL-STD-188-141A. Department of Defense Interface Standard. Interoperability and performances standards for medium and high frequency radio equipment", , 15 septembre 1988 (1988-09-15), pages 1-185, XP055082323, Extrait de l'Internet: URL:http://www.everyspec.com/MIL-STD/MIL-S TD-0100-0299/MIL-STD-188-141A_24838/ [extrait le 2013-10-02]

## Description

L'invention concerne un procédé et un système permettant une prise de liaison et un maintien de liaison dans un système de communications large bande, notamment en hautes fréquences ou HF. Elle s'applique dans le cadre du besoin de prise de liaison ALE pour Automatic Link Establishment et propose une approche de nouvelle génération, dite 4G, permettant d'initialiser une liaison en trafic dit « HL XL » reposant sur l'usage de n*3kHz non nécessairement contigus de bande utile, comme d'initialiser une liaison en trafic dit sur des bandes contiguës, soit de bande étroite à 3kHz, soit de type bande élargie, de 6 à 24 kHz comme dans la MIL STD 188-110C, connue du Domaine et ce pour différents usages.

Elle s'applique dans les systèmes de communication point à point.

Un système de communication sans fil comporte en général plusieurs dispositifs ou postes radio s'échangeant des données de tout type. Dans le domaine des communications, les liens HF offrent notamment une capacité hors ligne de vue ou BLOS qui permet de réaliser des communications à longue, voire très longue distance, sans nécessiter le recours à un satellite ou à l'emploi de stations relais. Néanmoins, la qualité des communications varie en fonction des conditions atmosphériques, le medium ionosphérique étant extrêmement variable. En bande VHF ou UHF le canal de propagation est moins fluctuant mais les déploiements mobiles peuvent conduire à des cas de brouillages du fait d'une volonté de réutilisation spatiale des fréquences, ce qui amène également à des fluctuations de la qualité du canal selon les fréquences utilisées.

L'un des objets de l'invention concerne la prise de liaison entre deux postes radio. On s'intéresse plus particulièrement dans la suite au cas de postes HF, dont au moins un poste appelant a une capacité de fonctionnement (émission et/ou réception) en large bande et souhaite déterminer une bande de communication utilisable pour une largeur de bande supérieure à 3KHz. Cette valeur correspond à ce qu'offrent les standards actuels, qu'il s'agisse de la solution d'établissement de lien automatiquement, dite de seconde génération connue sous l'abréviation ALE 2G (automatic link establishement 2G) selon le standard MIL STD 188-141 A, avec ou sans variantes propriétaires, ou dite de troisième génération ou ALE 3G selon le standard STANAG 4538, avec ou sans variantes propriétaires. Ce type de prise de liaison est particulièrement d'intérêt pour les postes capables d'employer un agrégat de plusieurs canaux HF tel que, par exemple, proposé dans le standard MIL STD 188-110C annexe D, où est décrit l'emploi de plusieurs porteuses contiguës de 3KHz ou de l'usage généralisé tel que décrit dans les demandes de brevet FR 10.04560 et FR 11.03083 du Demandeur ou de standards qui utilisent une forme d'onde mono-porteuse, selon par exemple le standard MIL STD 110-188C annexe D.

L'état de l'art connu du Demandeur propose différentes techniques pour la prise de liaison et le maintien de liaison large bande HF.

Une première technique consiste à effectuer une prise de liaison classique 3KHz et à élargir arbitrairement l'emploi autour, éventuellement avec un décalage (offset), de la fréquence centrale par rapport à la fréquence initiale, quitte à diminuer la bande utilisée ou à relancer la procédure si la bande est utilisée. Cette technique présente le risque de brouiller des fréquences déjà utilisées. Il n'y a en effet aucune assurance qu'il y ait des bandes disponibles autour de cette fréquence sélectionnée par l'ALE, et la durée de convergence est inconnue.

Une deuxième technique repose sur une prise de liaison classique de 3KHz et une écoute de la bande autour, afin de déterminer si on trouve suffisamment de bande disponible pour émettre en large bande. Il n'y a toutefois aucune assurance qu'il y ait des bandes disponibles autour de cette fréquence sélectionnée par l'ALE, et la durée de convergence est là encore inconnue, ce qui peut conduire à une solution potentiellement longue.

Une troisième solution consiste à réaliser autant de procédures de prise de liaison 3KHz que de bandes considérées et décider en fonction des mesures faites des liens de communication possibles. Cette solution conduit à un mécanisme nécessairement lent, dont la convergence peut même être problématique si des fréquences libres initialement sont occupées entre-temps au cours de la procédure.

Une quatrième solution décrite dans la demande de brevet EP 2 418 892 intitulé « High frequency automatic link establishment comunication system with wideband probe and related method », réalise une prise de liaison nativement large bande de 6 à 24 KHz à partir d'une fréquence F₀ mono porteuse robuste pour évaluer l'occupation d'un canal 6 à 24 KHz et à retenir la plage libre la plus large possible dans ce canal. Cette technique ne s'applique que pour des bandes contiguës.

Malgré tous les avantages offerts par les différentes techniques connues de l'art antérieur, les solutions existantes à base de prise de liaison 3KHz ne permettent pas d'évaluer la qualité des canaux adjacents dynamiquement, sauf à accepter un temps de prise de liaison très grand. La solution à base d'une porteuse 24 KHz telle que décrite dans la demande de brevet EP 2 418 892 ne permet pas d'évaluer une pluralité de canaux répartis sur plus de 24 KHz, ni d'adapter aisément la forme d'onde dans le cas où la fréquence initiale est entourée de canaux perturbés.

### Définitions

Le terme « legacy » désigne un système ou standard historique reposant sur des transmissions en bande unique, par exemple.

Le poste appelant correspond au poste ou dispositif de communication qui démarre la demande de communication. Le poste appelé est celui qui reçoit cette demande. Le mot poste et le mot station sont utilisés indifféremment pour désigner un même objet dans la présente description.

L'objet de la présente invention concerne notamment un procédé permettant d'établir une liaison en mode large bande, de préférence de manière compatible avec une prise de liaison legacy ou « liaison historique », au sens où un poste non compatible large bande pourra répondre à la prise de liaison. Cette méthode permet également de réaliser une estimation des fréquences utilisables pour des communications monoporteuses comme celles proposées dans la norme MIL STD 188 110C et ceci plus rapidement que ne le permettent les solutions actuelles.

L'invention concerne un système pour établir et maintenir une liaison ALE, établissement de lien automatique, dans le cadre d'une communication large bande, ledit système comprenant au moins :
- un premier poste de communication maître adapté à émettre un message pour l'établissement d'une communication avec un service cible souhaité SLA, vers un poste appelé sur une fréquence fi, le premier poste comprenant un premier émetteur/récepteur radio et un premier contrôleur, et dispose d'un ensemble de sous-bandes possibles pour la communication,
- un deuxième poste de communication appelé comprenant un deuxième émetteur/récepteur radio et un deuxième contrôleur, le système est caractérisé en ce que:
- le premier poste maître est adapté à émettre une séquence test, Sₜₑₛₜ, connue sur une sous-bande Bk vers le deuxième poste appelé dès que ledit deuxième poste appelé acquitte le fait de passer en sondage pour déterminer la meilleure configuration à retenir pour l'établissement de la liaison,
- ledit deuxième contrôleur du deuxième poste appelé est adapté à déterminer des notes de qualité sur les Mk fréquences de la sous-bande Bk et à transmettre lesdites valeurs de qualité vers le premier poste maître,
- ledit premier poste maître est adapté à déterminer à partir des notes des qualité, la capacité de la sous-bande Bk à répondre au service cible souhaité SLA demandé par la communication, et à sélectionner la sous-bande Bk représentant la capacité requise ou la meilleure note de qualité, à déterminer la sous-bande à utiliser pour la communication, à confirmer au deuxième poste de communication appelé, la sous-bande sélectionnée, ainsi que les sous-canaux retenus, et à déclencher la communication avec ledit deuxième poste appelé.

Selon un mode de réalisation, la communication est bidirectionnelle et le deuxième poste est adapté à émettre une deuxième séquence connue vers le premier poste maître, ledit poste maître étant adapté à évaluer la capacité d'une sous-bande Bk à répondre aux besoins des services cibles souhaités SLAcible, SLAcible2 dans le sens communication du poste maître vers le poste appelé et réciproquement.

Ledit premier poste de communication maître comprend, par exemple, des moyens adaptés à déterminer un ensemble de fréquences dites fréquences d'appel f_{A} pour l'établissement d'une liaison en bande étroite entre le premier poste maître et le deuxième poste en fonction de contraintes en termes de débit demandé, latence maximale autorisée, point de fonctionnement du taux d'erreur cible, lesdites fréquences étant utilisées lors de la demande de communication.

Le premier poste maître peut comprendre des moyens adaptés à établir un lien de communication bande étroite entre le premier poste maître et le deuxième poste appelé, à vérifier la compatibilité du poste appelé avec le mode de communication 4G et à continuer la communication dans un mode compatible au poste appelé.

La séquence de test connue Sₜₑₛₜ est, par exemple, composée d'une trame comprenant un en-tête véhiculant l'adresse du poste appelé, une première série de symboles à moyen débit et une deuxième série de symboles à bas débit.

L'invention s'applique pour un système de communication large bande, par exemple pour des communications haute fréquence HF, le premier poste et le deuxième poste étant des postes hautes fréquences.

L'invention concerne aussi un procédé de prise de liaison ALE large bande et de maintien de liaison entre un premier poste maître et un deuxième poste appelé, caractérisé en ce qu'il comprend au moins les étapes suivantes :
- le deuxième poste de communication appelé est en veille sur un plan de fréquences {f₁,...f_{M}} prédéfini,
- le premier poste de communication maître émet un message de demande de communication vers le poste appelé sur une fréquence fi et attend son acquittement de détection d'appel,
- le premier poste de communication maître dispose d'un ensemble de sous-bandes possibles pour la communication,
- le premier poste de communication maître démarre la procédure de calcul de qualité des canaux en transmettant une séquence de test connue vers ledit poste appelé, ledit poste appelé détermine les notes de qualité sur les Mk fréquences de la sous-bande Bk, puis transmet ces valeurs au poste maître,
- le deuxième poste de communication maître détermine à partir de ces notes de qualité, la capacité de la sous-bande Bk à répondre au service cible souhaité SLA, et
   - sélectionne ladite sous-bande si elle permet de répondre au service cible SLA demandé par la communication, ou
   - réitère les étapes de recherche de sous-bande en sélectionnant une nouvelle sous-bande Bk, ou bien
   - dans le cas où il ne reste plus de sous-bandes permettant d'atteindre une qualité supérieure à la meilleure qualité trouvée sur les sous-bandes testées précédemment, élit la sous-bande présentant la note de qualité la meilleure,
- le poste maître détermine la sous-bande à utiliser pour la communication, confirme au poste appelé la sous-bande sélectionnée ainsi que les sous-canaux retenus et démarre la communication.

Le procédé comporte, par exemple, une étape de détermination des sous-bandes possibles dans laquelle, une fois que le poste appelé a validé la détection d'appel, sur la fréquence fi, ledit poste appelé transmet ses informations de qualités de plan de fréquences et ses caractéristiques postes, et ledit poste maître détermine les sous-bandes possibles,

Le procédé met en oeuvre, par exemple, une communication bidirectionnelle et le procédé exécute, par exemple, au moins les étapes suivantes: lors de la transmission des notes de qualité obtenues par le deuxième poste appelé pour une sous-bande Bk, le deuxième poste appelé transmet une deuxième séquence connue vers le poste maître, ledit poste maître évalue alors la capacité d'une sous-bande Bk à répondre aux besoins des services cibles souhaités SLAcible, SLAcible2 dans le sens communication du poste maître vers le poste appelé et réciproquement.

Lors de la mise en oeuvre du procédé, la note de qualité d'un canal peut être évaluée par un poste recevant une séquence test en estimant le débit que le poste saura recevoir sur le canal considéré.

Dans le cas où l'on ne trouve pas de sous-bandes vérifiant la qualité requise pour la communication, le procédé sélectionne la bande présentant la meilleure note de qualité et actualise les notes des différents canaux par la valeur la plus récente testée.

Le procédé peut comporter une étape d'initialisation de liaison en bande étroite vérifiant la compatibilité du mode de communication entre le poste maître et le poste appelé et continue la communication avec le mode compatible trouvé ou termine la demande de communication.

Selon une variante de réalisation, le procédé comporte une étape d'initialisation de liaison utilisant un poste appelé large bande adapté à surveiller plusieurs fréquences en même temps.

Le procédé utilise, par exemple, comme séquence de test un message sous forme d'une trame composée d'un premier en-tête contenant l'adresse du poste appelé, suivi d'une première série de symboles à moyen débit et d'une deuxième série de symboles à bas débit.

Les symboles utilisés sont, par exemple, choisis parmi la liste suivante : PSK (Phase Shift Keying), QAM (Quadrature Amplitude Modulation),

La communication entre le poste maître et le poste appelé étant établie, alors l'information transmise est transmise multiplexée sur l'ensemble des voies.

Le procédé est utilisé dans le cas de bande de communication large bande haute fréquence HF.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un schéma d'un système de communication en HF,
- La figure 2, un diagramme des étapes mises en oeuvre dans le procédé selon l'invention,
- La figure 3, une illustration de la première phase avec sélection des fréquences à tester et des bandes de fréquences candidates,
- La figure 4, l'illustration de la définition de sous-bandes utiles sur la bande passante,
- La figure 5, un exemple d'étapes d'intégration de la procédure ALE,
- La figure 6, un schéma bloc des étapes mises en oeuvre pour le choix de la sous-bande de trafic,
- La figure 7, un exemple de format d'une trame de test,
- La figure 8, un schéma bloc dans le cas d'une communication bilatérale, et
- La figure 9, une illustration possible pour l'imbrication de procédé ALE/ALM.

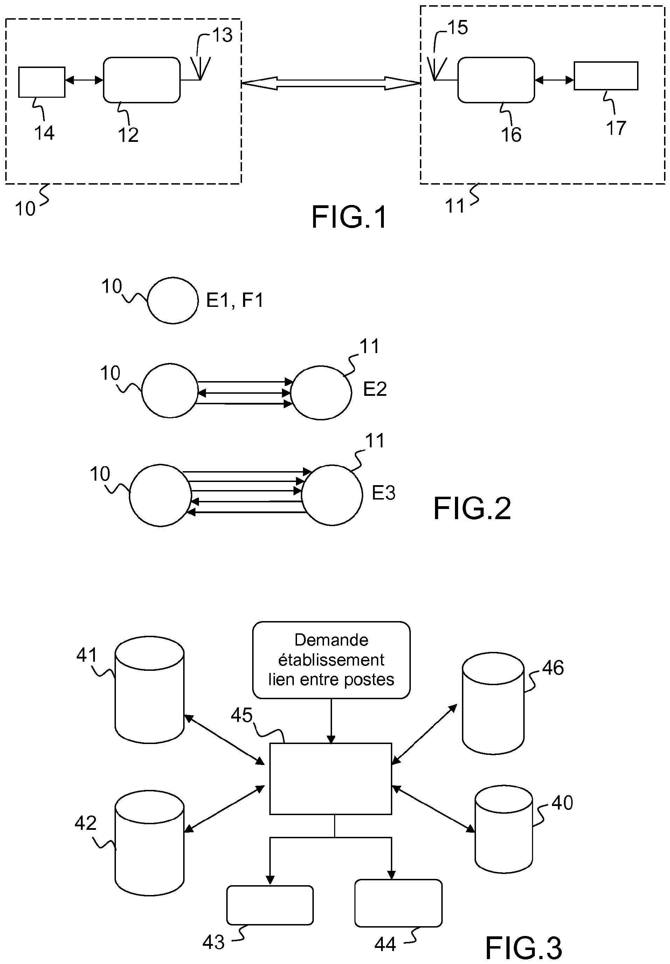

La présente invention va maintenant être décrite en se référant aux figures 1 à 7, pour un système de communication large bande HF, de manière illustrative et nullement limitative.

La figure 1 schématise un exemple de système de communication large bande HF adapté à mettre en oeuvre la procédure d'établissement de liaison ALE selon l'invention. Le système 1 comprend un premier poste ou premier dispositif de communication radio HF, 10, et un second poste ou second dispositif de communication HF, 11. Le premier dispositif de communication 10 comprend un premier émetteur/récepteur 12 couplé à une première antenne 13 et un premier contrôleur 14. Le premier émetteur/récepteur est doté d'un microprocesseur et d'un modem. Le second dispositif de communication radio HF, 11, comprend une seconde antenne 15, un second émetteur/récepteur 16 couplé à la seconde antenne et un second contrôleur 17 couplé au second émetteur/récepteur. Le second émetteur/récepteur est lui-même équipé d'un microprocesseur adapté à exécuter les étapes du procédé selon l'invention. Selon une autre variante de réalisation, l'émetteur/récepteur 12 ou 16 peut être en pratique relié à des antennes d'émission et de réception différentes. Les postes sont dans l'exemple donné, des postes radio HF.

Les premier et second dispositifs de communication 10, 11 peuvent fonctionner dans une gamme de fréquences variant de 1.5 à 30 MHz (bande HF dite militaire). Ce dispositif peut aussi être utilisé dans des bandes supérieures VHF/UHF (Very High Frequency/Ultra High Frequency) pour des radios disposant d'une capacité large bande.

Avant d'expliciter la mise en oeuvre du procédé selon l'invention, quelques hypothèses et principes sont posées.

Les fréquences sélectionnées sont, de préférence, utilisées autant que possible dans les deux sens de la communication, y compris lorsque les débits à transmettre sont dissymétriques, afin d'éviter que les fréquences ne soient détectées comme utilisables par d'autres postes, et donc que la communication ne se dégrade.

Dans l'exemple donné de mise en oeuvre du procédé selon l'invention, on suppose que c'est le poste appelant ou station 10 à l'initiative de l'ouverture de la communication qui gère l'établissement de la communication et son maintien et qui est le poste maître. C'est donc ce poste qui collecte les informations nécessaires au choix de la ou des fréquences, sans qu'il ait besoin de fournir ses propres informations, telles que, par exemple, ses capacités antennes, sa puissance, son observation des occupations de bande et ses niveaux de bruit.

La prise en compte des informations du poste appelé sera réalisée grâce à la transmission des données de qualité, de position, mais également des besoins éventuels du poste pour qu'il puisse profiter du lien pour transmettre des données qui pourraient être en attente de transmission de sa part, faisant alors basculer la liaison dans un mode dit « bi-directionnel », par opposition au cas où le poste récepteur n'a pas de données à transmettre, hors les données de signalisation et de contrôle (i.e. acquittements) que l'on désigne mode « uni-directionnel ».

Dans une stratégie de rationalisation de l'usage de la ressource spectrale, le procédé pourra répartir les canaux du plan de fréquences en deux types : des fréquences dites « d'appel », ayant notamment pour vocation à être utilisées uniquement pour le démarrage de la prise de liaison et des fréquences dites « de communication », utilisées notamment dans l'étape d'échange de données, ces fréquences pouvant être évaluées lors de la mise en oeuvre du procédé. Cette séparation offre comme avantage de limiter le nombre de fréquences d'appel et donc d'accélérer la première étape de prise de liaison, l'encombrement sur ces fréquences devant être limité par leur usage uniquement en prise de liaison.

En pratique, il est possible de choisir lors de la planification du système de communication, d'attribuer aux fréquences excentrées par rapport aux autres, le rôle de fréquence d'appel. Inversement, le fait de favoriser des fréquences qui ne sont pas capables de haut débit, les fréquences ayant peu de voisins à moins de 200kHz, permettra d'éviter de réduire les capacités haut débit.

Sur la figure 2 sont représentées en résumé, trois des étapes pouvant être mises en oeuvre par le procédé selon l'invention.

### Etape 1

L'étape 1, E1, est optionnelle et correspond au niveau du poste appelant 10 à une étape de sélection des fréquences d'appel en fonction notamment de l'heure, du lieu, des informations de sondage préexistantes, des mesures locales éventuelles, et de la connaissance du plan de fréquences, d'un jeu de fréquences extrait du plan de fréquences globales pour établir une liaison bande étroite 3kHz, entre appelant et appelé. Ces fréquences feront partie d'un ensemble de fréquences dites fréquences d'appel, qui comme dit précédemment, pourront être limitées en nombre afin d'accélérer la prise de liaison initiale.

La figure 3 schématise la phase 1 ou étape 1 de la procédure qui va conduire à définir un ensemble 43 de fréquences d'appel f_{A}, ainsi que des sous-bandes Bi candidates, 44, possibles pour la communication selon le service souhaité, parmi celles de l'ensemble du plan de fréquences {f₁,...., f_{M}}. Le procédé va déterminer, localement au poste maître ou station d'appel 10, les fréquences permettant de lancer l'établissement de la liaison avec le poste appelé et de déterminer le plus rapidement possible une sous-bande Bk permettant de mettre en oeuvre le service souhaité, défini par son SLA abréviation anglo-saxonne de Service Level Agreement, qui donne des contraintes en termes de débit demandé, de latence maximale autorisée, de point de fonctionnement en terme de rapport signal-à-bruit.

Le poste d'appel 10 envoie une demande d'établissement d'un lien entre lui et un poste appelé 11. La fonction 45 de collecte des informations et d'évaluation des choix de prise de liaison s'interface avec le logiciel de prédiction embarqué 40 qui prend en compte des informations relatives aux positions géographiques mémorisées dans une base de données 41, aux qualités connues stockées dans une base de données 42, pour définir 43, un plan de fréquences d'appel ainsi que l'ensemble 44 des sous-bandes possibles pour une communication, comprises dans un intervalle Fₘᵢₙ, Fₘₐₓ à partir des fréquences possibles 46.

Selon un mode de mise en oeuvre, le procédé suppose que l'on dispose d'une série de canaux élémentaires, typiquement de 3 kHz, faisant partie d'un plan de fréquences global injecté dans le poste d'appel lors de la préparation de son utilisation. Ce plan de fréquences peut contenir tout type de fréquences, par exemple des fréquences qui ne sont pas ou que peu passantes à certains moments de la journée, de l'année, etc.

Par exemple, dans le cadre de communications sur un théâtre d'opérations tactiques ou encore dans le domaine de l'aéro-naval, la cohérence sur une zone définie par un rayon de plusieurs centaines de kilomètres des valeurs LUF/MUF (fréquences les plus faibles utilisables/ fréquences les plus élevées ou en anglo-saxon Lowest Usable Frequency/Maximal Usable Frequency) peut permettre de restreindre la plage de veille pour les postes en écoute et ainsi permettre aux postes appelants de lancer leur prise de liaison sur moins de fréquences, en éliminant celles qui ne sont pas passantes.

Dans le cadre d'une opération projetée reportant des informations vers un centre de commandement, la connaissance de la zone de déploiement ainsi que la zone du recueil, combinée à la date, peut permettre de sélectionner automatiquement sur chaque poste un sous-plan de fréquences efficace qui sera celui utilisé automatiquement par tous les postes.

Lorsque la procédure ALE est asynchrone, procédure par exemple de type 2G, le poste appelant pourra alors réaliser son choix d'ordre d'appel des fréquences en fonction de son propre environnement radio, et de ses connaissances préalables des liens avec le poste appelé.

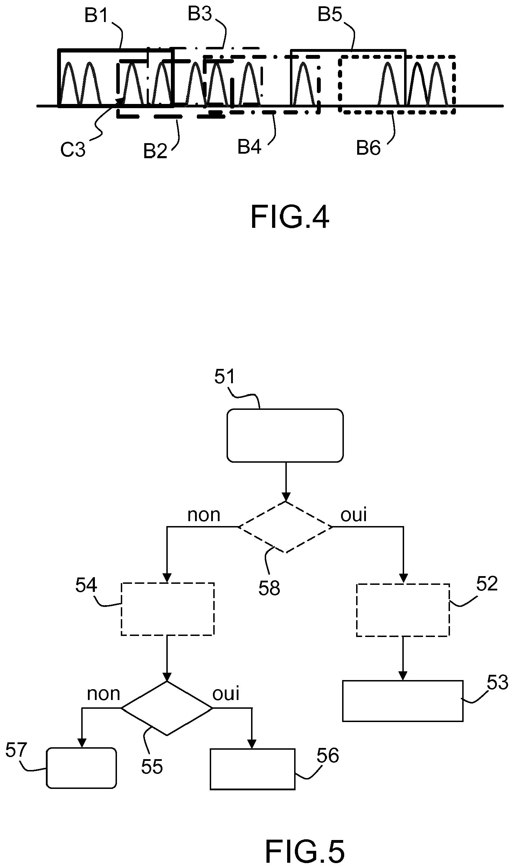

Au cours de cette première étape, le procédé réalise une étape de filtrage en fonction des limitations de la communication, afin de définir un ensemble de sous-bandes radio possibles sur lesquelles le système haut débit est susceptible de travailler. Ces sous-bandes Bj sont, par exemple, un regroupement des canaux élémentaires donnés lors de la définition du plan de fréquences. Ces différentes sous-bandes peuvent être prédéfinies en amont du fonctionnement du système de communication. La figure 4 donne un exemple de sous-bandes Bi disjointes entre elles et qui peuvent avoir des canaux Cₖ communs, par exemple le canal C₃ est commun aux deux sous-bandes B₁, B₂.

L'appel initial du poste appelant fournit implicitement une synchronisation entre les deux cotés du lien de communication, liée à la reconnaissance du préambule du message de demande d'appel ou de communication. Cette synchronisation offre la possibilité d'avoir un mécanisme d'horloge permettant de basculer de manière coordonnée d'une sous-bande Bᵢ non opérationnelle à la sous-bande Bᵢ₊₁ suivante sur expiration d'un intervalle de temps ou « timer » dans les étapes décrites ci-après.

L'étape E₁ est optionnelle, il est en effet possible de posséder au préalable un plan de fréquences et des sous-canaux prédéfinis permettant de mettre en oeuvre le service souhaité par son SLA et exécuter les étapes suivantes du procédé. Dans un réseau synchrone avec postes legacy, le procédé va considérer un plan de fréquences existant, ou une mise à jour de ce plan distribuée par un poste maître.

### Etape 2

Cette étape permet notamment de constituer des réseaux hétérogènes dans lesquels les postes n'utilisent pas les mêmes protocoles de communication, par exemple les standards 2G, 3G ou 4G.

L'étape 2, E2, correspond à la phase d'établissement d'une liaison bande étroite, par exemple 3 kHz, entre poste appelant 10 et poste appelé 11 compatible de standards « legacy », par exemple les standards 2G ou 3G, afin d'établir un lien de communications entre le poste appelant 10 et le poste appelé 11, avant de lancer la procédure visant la création de lien et de vérifier la capacité 4G des postes.

Afin de renforcer la rapidité de mise en place d'une procédure ALE 4G selon l'invention, il est possible de vérifier que l'étape est compatible de postes anciennes génération de type 2G ou 3G. Ceci se fait, par exemple, si le message HELLO est compréhensible pour un poste legacy comme par un poste 4G, seul ce dernier répondant avec ses capacités et donc permettant de continuer la procédure en 4G comme il est illustré en figure 5.

Le poste appelant envoie un message Hello, 51, sur un canal 3kHz, vers le poste appelé. Si le poste appelé est compatible du mode « HF XL » alors le poste appelé répond en communiquant ses informations de capacités (le type de station ou poste radio, la capacité largeur de bande, sa puissance, les caractéristiques de son antenne, et une estimation de qualité sur l'ensemble du plan de fréquences, éventuel besoin de transmission de son côté et SLA associé, ...), 52, puis le procédé passe à la troisième étape du procédé en large bande, 53. Si au moins l'un des postes n'est pas compatible du mode 4G, alors le poste appelé répond, 54, dans son mode standard 2G ou 3G. C'est alors au poste appelant de décider si il est d'accord pour continuer à communiquer, 55. Si oui, 56, le procédé exécute une procédure standard correspondant, dans l'exemple donné, soit au 2 G soit au 3 G, autrement, 57, le poste appelant abandonne la tentative de connexion. Cette approche est décrite à la figure 5.

En pratique, l'ALE 4G ne pourra émuler que l'un des deux modes au choix à un même instant, sauf à faire une veille multiple comme c'est déjà le cas actuellement. Pour la mise en oeuvre de ces étapes, il est possible d'utiliser des messages au format ALE 2G ou ALE 3G suivant le type de compatibilité retenue, avec l'utilisation d'un ou plusieurs bit(s) non utile du message pour signaler la capacité 4G, auquel le poste appelé pourra répondre en fonction de sa propre capacité 4G.

Cette phase est réalisée sans présupposer que le poste appelé a une capacité autre que bande étroite 3kHz. Cette fonctionnalité permet notamment de ne pas présager du type de déploiement, un poste large bande pouvant par exemple se trouver employé avec une antenne bande étroite une première fois, puis une antenne large bande une autre fois. Quelque soit le mode de communication synchrone ou asynchrone, le poste appelé va balayer l'ensemble du plan de fréquences d'appel, ce dernier étant constitué uniquement de fréquences passantes sélectionnées lors de l'étape 1. En pratique, si le poste appelé est large bande, il pourra veiller plusieurs fréquences en même temps et ainsi améliorer ses chances de réception et/ou accélérer la prise de liaison. Dans le cas particulier d'une station appelée capable de réaliser une écoute instantanée de l'ensemble des fréquences d'appel possibles, il ne sera plus utile d'être synchrone pour procéder à la prise de liaison, la station appelante pouvant choisir alors de balayer les fréquences d'appel à son gré. Dans le cas particulier d'une station appelée capable de réaliser une écoute sur une partie des fréquences d'appel, on pourra proposer de balayer les fréquences de façon à favoriser la prise de liaison rapide, par exemple en regroupant les fréquences proches les unes des autres. Cependant, cette phase reste compatible d'une prise de liaison standard telle que réalisée dans les procédures bande étroite 2G ou 3G.

Dans cette phase d'établissement d'un lien sur fréquence fi, il n'est pas nécessaire que la fréquence fi soit forcément dans la sous-bande cible finale de communications à haut débit.

De préférence, le procédé prend en compte les qualités au niveau de la station d'appel de la communication, afin d'éviter des perturbations éventuelles sur le signal reçu.

Le poste d'appel ou appelant gère l'ensemble des étapes du procédé selon l'invention, toutefois, le poste d'appel va fournir l'information de SLA qui permet au récepteur du poste appelé de savoir vers quel type de ressource basculer (i.e. capacité haut débit ou bas débit). Ainsi dans le cas où le SLA correspond, par exemple, à une simple communication phonie bas débit, seule la phase de prise de liaison pourrait être de type 4G, la phase de transmission de données faisant suite pouvant se faire avec l'émetteur/récepteur utilisant un mode « legacy ». Une telle approche permet de profiter de l'accélération de la prise de liaison, sans occuper pour autant une ressource rare de type XL pour des services bas débit.

### Etape 3

L'étape 3, E3, est une phase dans laquelle le procédé va qualifier les canaux afin de choisir la sous-bande de communication. C'est une phase d'évaluation large bande des différentes bandes envisageables pour la communication et de sélection de la sous-bande de travail en fonction d'une mesure de qualité des différents canaux, avec sélection de la première bande testée compatible du besoin exprimé en termes de service, ou à défaut si le service est très exigeant, de la meilleur sous-bande possible. Cette troisième étape et le choix final de fréquences, ou qualification des canaux, est dans le présent exemple gérée par le poste appelant, dénommé poste maître.

Lors de l'étape d'évaluation large bande, le procédé selon l'invention va chercher à :
1- intégrer les informations de sondage local de chaque poste ou station dès le début du processus de prise de liaison, notamment lorsque le poste a pu établir des premières mesures de qualité, reposant, par exemple, sur une mesure de niveau de bruit dans les canaux d'intérêt (ceux du plan de fréquence ou du sous-ensemble sélectionné). Ces informations auront pour objet de permettre au poste appelant de lancer la phase recherche de fréquences vers une sous-bande a priori favorable;
2 - affiner l'évaluation de la qualité de chacun des canaux possibles selon le plan de communications. En effet, si dans le cadre de la phase de veille il est possible que les différents postes se constituent une table d'information sur la qualité reposant sur une simple information de niveau de bruit, une telle mesure reste peu précise et ne sera pas disponible pour un poste souhaitant réaliser une entrée tardive ou préalablement en communication, donc non à même d'évaluer régulièrement le canal;
3 - prendre en compte pour le choix de la sous-bande et du nombre de fréquences recommandé, le SLA visé, en termes de débit, latence, point de fonctionnement, et ce éventuellement à la fois au niveau du poste appelant et du poste appelé ou récepteur.

Le procédé va tester dans les différentes sous-bandes prédéfinies, l'emploi d'une séquence connue, par exemple une séquence pseudo-aléatoire, d'une durée de quelques secondes à quelques dizaines de secondes, afin de permettre une mesure moyenne de la qualité trouvée sur une sous-bande avec une puissance constante dans chaque canal. De fait, la qualité mesurée sur un canal ne dépend pas du nombre de canaux dans la sous-bande.

Les postes émettront leur réponse sur l'ensemble des canaux en multiplexant les données afin d'utiliser la diversité fréquentielle apportée notamment dans le cas où l'on transmet des réponses ou des informations de changement, un surcodage pouvant être envisagé afin d'assurer que l'information est bien transmise, alors que les séquences connues sont émises elles non multiplexées pour permettre d'évaluer les performances de chaque canal indépendamment.

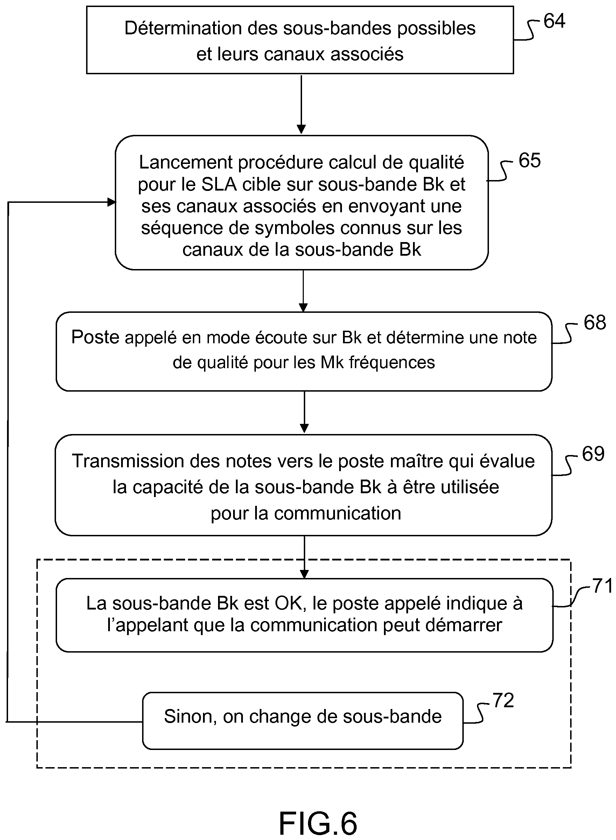

Le procédé selon l'invention repose notamment sur un calcul des qualités sur les Mk fréquences d'une sous-bande Bk et ceci sur un ensemble de sous-bandes défini en intégrant, si ils existent, les enseignements de l'étape 1, les capacités du poste appelé qui auront été communiquées dans l'étape 2 ainsi que les contraintes du ou des service(s) recherchés en terme de SLA. Les étapes mises en oeuvre dans le cas d'une communication unidirectionnelle sont, par exemple, décrites ci-après et en relation avec la figure 6. Le calcul de la qualité de canal est réalisé sur chaque canal et se fait sur l'erreur d'égalisation et donc canal par canal.

Dans un premier temps, le poste maître va définir un ensemble de sous-bandes possibles pour la communication.

Cette action se fait dans le poste maître sur la base des informations disponibles sur ses propres capacités et celles du poste appelé obtenues lors de l'étape 2, ainsi que des enseignements de l'étape 1. Ayant déterminé, 64, une ou plusieurs sous-bandes possibles et leurs canaux associés, le poste maître peut les passer l'une après l'autre ou préférentiellement les ordonner en termes de débit possible au point de fonctionnement latence + taux d'erreur cibles. Soit Bi les différentes sous-bandes ordonnées, avec i variant de 1 à p et leurs M canaux associés f¹ᵢ,... f¹_{M}.

Le poste maître déclenche alors, 65, la procédure permettant de déterminer la sous-bande la mieux adaptée pour la communication entre les deux postes.

Le poste maître va alors demander sur la fréquence établie fj en bande étroite lors de l'étape 2 le démarrage de la procédure de calcul de qualité pour le SLA cible pour la sous-bande B₁ et ses M canaux f₁¹....... f_{M}¹. Le poste appelé accuse réception de la confirmation de la communication sur la fréquence fj, 66. Il passe en mode écoute, par exemple sur une fréquence de 200kHz sur la sous-bande B₁. Le poste appelé renvoie un message d'accord au poste maître pour commencer la procédure de sélection de la sous-bande de trafic.

Le poste maître émet, 67, une séquence de symboles connus sur la sous-bande B₁ vers le poste appelé. Le poste appelé, en écoute sur cette sous-bande B₁, va démoduler les M₁ fréquences de la sous-bande B₁. Puis le poste appelé va, 68, comparer les symboles reçus à la séquence connue et va estimer les qualités sur les M₁ fréquences de la sous-bande et attribuer des notes de qualité Qi pour les M₁ fréquences. Le poste appelé, 69, envoie les notes de qualité correspondantes au poste maître. La transmission de ces informations de réponse s'effectue, par exemple, en mode bas débit entrelacé sur les M₁ fréquences ou sur une partie de ces fréquences, les meilleures mesurées au sens du poste appelé.

Le poste maître, sur réception des notes de qualité va évaluer, 70, la capacité de la sous-bande B₁ à répondre au service SLA cible. Le poste maître reçoit donc un ensemble de notes sur les canaux de sa sous-bande et en dérive une note globale pour la sous-bande.

Si la sous-bande B₁ remplie les conditions requises pour le service alors le poste maître avertit, 67, le poste appelé, en utilisant la sous-bande B1 et la communication entre les deux postes peut commencer.

Dans le cas contraire, 72, lorsque la sous-bande B₁ n'offre pas la capacité requise pour la communication, le poste maître annonce au poste appelant qu'il considère la bande suivante B₁₊₁ et pour les canaux associés. Le poste appelant accuse réception et passe en écoute sur la nouvelle sous-bande. Il accuse réception au poste maître et effectue des mesures de qualité pour cette sous-bande.

En cas de non réponse sur une sous-bande le procédé bascule automatiquement après expiration d'un timer du côté émetteur comme du côté récepteur à une sous-bande Bᵢ₊₁ du plan de fréquences.

En généralisant les étapes du calcul pour une sous-bande Bk, le procédé peut être explicité comme suit. Le poste maître émet une séquence de symboles connue sur la sous-bande Bk. Le poste appelé écoute sur cette sous-bande et démodule les Mk fréquences de la sous-bande. Le poste appelé compare la séquence connue aux symboles démodulés et estime des notes de qualité sur chacune des fréquences Mk. Le poste appelé transmet ces informations en mode bas débit entrelacé sur les Mk fréquences par exemple, au poste maître. Le poste maître évalue la capacité de la sous-bande Bk à répondre au service SLA. Dans le cas où la sous-bande Bk vérifie cette capacité, Le poste maître confirme au poste appelé, l'utilisation de la sous-bande Bk et de ses canaux associés. La procédure de prise de liaison en large bande HF est terminée et la communication va s'effectuer sur les n canaux choisis de la sous-bande Bk, 69. Le poste appelé va recevoir le message du poste maître et passer en mode réception sur les n canaux choisis de Bk. Le poste appelé transmet au poste maître un message OK pour communication. Les deux postes se positionnent alors sur la sous-bande sélectionnée et démarrent la communication. Le deuxième contrôleur est adapté à déterminer des notes de qualité sur les Mk fréquences de la sous-bande Bk et à transmettre les valeurs de qualité au premier poste maître.

Chacune des sous-bandes sera testée jusqu'à ce que l'une des deux conditions suivantes soit atteinte :
- la qualité nécessaire pour le service demandé SLA est atteinte, on retient la sous-bande considérée,
- il n'est plus possible avec les sous-bandes restantes d'atteindre une qualité supérieure à la meilleure qualité trouvée sur les sous-bandes précédemment testées, par exemple par faute de fréquences.

La qualité de la liaison est calculée comme la somme des qualités des différents canaux qu'elle contient. Ces qualités élémentaires sont elles-mêmes calculées en fonction du débit qu'il sera possible de faire passer sur le canal. En pratique, la séquence de symboles connus ou séquence de test Stest, regroupant des symboles de modulations PSK (Phase Shift Keying) et QAM (Quadrature Amplitude Modulation) permettra d'estimer si il est possible de passer par exemple les débits suivants : 12800 b/s, 9600 b/s, 8000 b/s, 6400 b/s, 4800 b/s, 3200 b/s, 1200 b/s, 600 b/s, 300 b/s, 150 b/s, 75 b/s ou 0 b/s (cas de non réception). Par souci de généralisation, on pourra ajouter la valeur 1600 b/s, correspondant typiquement à un mode BPSK, extension bas débit du ST4539.

Le poste recevant la séquence de test Sₜₑₛₜ évalue la qualité perçue et détermine une « note » pour chaque canal en estimant le débit qu'il saura recevoir sur le canal considéré. Cette note, sur une échelle de 0 à 15 (4 bits) par exemple : 0 = pas de réception, 1 = 75 b/s, 2 = 150 b/s, 3 = 300 b/s, 4 = 600 b/s, 5 = 1200 b/s, 6 = 1600 b/s, 7 = 3200 b/s, 8 = 4800 b/s, 9 = 6400 b/s, 10 = 8000, 11 = 9600, 12= 12800, les notes suivantes restant réservées pour des combinaisons de modulations et codage ou *modcod* non encore standardisés.

Dans les deux sens, une fois la communication lancée, l'information transmise, les données, la signalisation, les acquittements, etc. sont transmis, par exemple, multiplexés sur l'ensemble des voies, afin de bénéficier du gain de diversité, mais aussi d'occuper les fréquences dans les deux sens de la communication, afin d'éviter que les fréquences ne soient détectées comme « libres » par d'autres communications qui viendraient perturber la communication en cours.

Dans le cas où le procédé ne trouve pas de sous-bande permettant d'atteindre le SLA souhaité, il retient la sous-bande offrant la meilleure note. On note que certains canaux Ci peuvent appartenir à plusieurs sous-bandes Bj, et donc peuvent être testés plusieurs fois. Le procédé mis en oeuvre par le poste appelé actualise alors les notes des différents canaux par la valeur la plus récente testée et recalculera l'ensemble des notes des sous-bandes, pour déterminer la meilleure.

Dans le cas où il y aurait un nombre important de fréquences non accessibles sur la sous-bande et où la procédure de réponse en large bande sur la totalité de la sous-bande B₁ ne serait pas efficace, il est possible de procéder en transmettant le message d'information sur les qualités non pas sur toute la sous-bande B₁, mais multiplexé sur l'ensemble des fréquences dont le niveau de qualité est supérieur à un seuil donné estimé par son rapport signal à bruit en réception. Le poste maître reçoit donc un ensemble de notes sur les canaux d'une sous-bande testée et en dérive une note globale pour la sous-bande. Cette note correspond non pas à une somme des notes élémentaires de qualité sur les canaux mais à une moyenne pondérée tenant compte des débits auxquelles ces notes correspondent. Ainsi, pour une sous-bande B dont les trois fréquences auraient été notées respectivement 1, 4 et 11, la note globale sera 10275. Cette note est à comparer avec le débit visé, par exemple un débit de 32 kb/s nécessite une note d'au moins 32000.

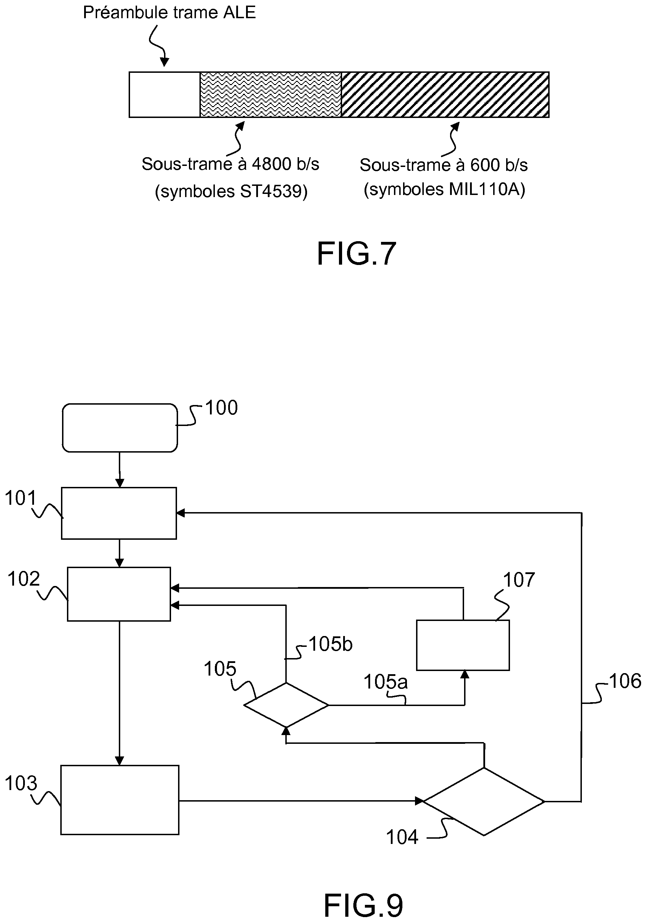

La figure 7 schématise un exemple de format de trame possible pour la trame de test. On voit dans cette trame de test des symboles provenant de deux standards différents, chacun étant démodulés par un égaliseur particulier. Ceci s'explique car de préférence, pour avoir une estimation fine de la qualité du canal, c'est le même égaliseur que celui de la forme d'onde employée pour la phase ultérieure de transmission de données qui sera utilisé.

La séquence de test peut comporter un préambule trame ALE véhiculant l'adresse de la station appelée, par exemple une adresse multicast ou de groupe, suivi d'une première série de symboles à moyen débit, typiquement de symboles STANAG 4539 à 4800 b/s, puis d'une deuxième série de symboles à bas débit, typiquement des symboles MIL STD 188-110A à 600 b/s. Ce type de trame permet notamment de déterminer des erreurs d'égalisation pour les différents types d'égaliseur du poste ou station.

Pour les deux parties de la trame, le calcul d'estimation du rapport signal à brut à partir de l'erreur quadratique moyenne est effectué sur la constellation après égalisation.

Un exemple chiffré va maintenant être donné afin d'illustrer le principe mis en oeuvre par l'invention.

On considère un plan de fréquence à 16 canaux, répartis dans 4 sous-bandes dont la largeur ne dépasse pas 200 kHz.
B1 = réunion des canaux C1 à C8
B2 = réunion des canaux C3 à C12
B3 = réunion des canaux C6 à C14
B4 = réunion des canaux C7 à C16
Après la phase d'échange, on obtient après test des quatre sous-bandes les notes de qualité suivantes :

| | C1 | C2 | C3 | C4 | C5 | C6 | C7 | C8 | C9 | C10 | C11 | C12 | C13 | C14 | C15 | C16 |
|---|---|---|---|---|---|---|---|---|---|---|---|---|---|---|---|---|
| Mesure B1 | 5 | 6 | 10 | 0 | 2 | 3 | 7 | 9 | | | | | | | | |
| Mesure B2 | 5 | 6 | 9 | 0 | 3 | 3 | 6 | 7 | 9 | 8 | 9 | 1 | | | | |
| Mesure B3 | 5 | 6 | 9 | 0 | 3 | 2 | 8 | 9 | 9 | 10 | 6 | 2 | 9 | 0 | | |
| Mesure B4 | 5 | 6 | 9 | 0 | 3 | 2 | 7 | 10 | 10 | 9 | 7 | 3 | 10 | 0 | 1 | 0 |
| | | | | | | | | | | | | | | | | |
| Actualisation | 5 | 6 | 9 | 0 | 3 | 2 | 7 | 10 | 10 | 9 | 7 | 3 | 10 | 0 | 1 | 0 |

Les notes des quatre sous-bandes sont alors calculées :
- B1 :: 20850
- B2 :: 35950
- B3 :: 37250
- B4 :: 37175

Dans l'exemple où l'on rechercherait une solution dépassant la note 34000, on s'arrêterait après avoir évalué la sous-bande B3. En revanche, dans le cas où la limite serait placée à 40000, les quatre bandes seraient testées et au final la meilleure serait retenue, c'est-à-dire ici aussi B3.

C'est donc la sous-bande B3 qui sera choisie, et en pratique le poste maître décidera de ne pas utiliser C14 (totalement brouillée) et probablement pas C6 et C12 (débits très faibles alors que les autres canaux sont passants et donc pourront même potentiellement aller au-delà du débit détecté si on leur fournit plus de puissance).
Le poste maître émettra donc une confirmation vers le poste appelé pour indiquer que la sous-bande B3 est retenue et préciser les canaux qui seront utilisés pour le début de la phase transmission, ces canaux étant par exemple numérotés par ordre de qualité:

**Message 1 - exemple du format d'un message ALM.**

| C6 | C7 | C8 | C9 | C10 | C11 | C12 | C13 | C14 |
|---|---|---|---|---|---|---|---|---|
| 0 | 5 | 1 | 2 | 4 | 6 | 0 | 3 | 0 |

En pratique c'est ce même format de message qui sera utilisé lorsque l'on voudra indiquer, au cours de la procédure d'ALM (automatic link management), un changement des fréquences employées.

On note que l'on favorise implicitement avec cette approche les sous-bandes avec plus de canaux passants puisque l'augmentation du nombre de canaux ne diminue pas la puissance émise dans chaque canal lors du test. Cependant une sous-bande avec moins de fréquences, toutes de très bonne qualité, obtiendra un meilleur score qu'une sous-bande avec beaucoup de fréquences brouillées, ce qui est logique puisqu'elle permettra d'acheminer plus de données.
Le choix de la sous-bande réalisé, on calcule le nombre optimal de canaux dans la sous-bande en calculant la combinaison donnant a priori le meilleur débit compte tenu de la contrainte de puissance crête. Typiquement il est possible d'utiliser l'enseignement technique décrit dans le brevet du Demandeur FR 11.03084 « Procédé et système permettant l'allocation dynamique de puissance et/ou modulation dans un système comprenant n canaux ».

Le cas échéant, une transmission mono-canal pourra être le meilleur choix, et sera considérée si elle permet de servir le besoin du service en cours. On notera en pratique que les débits inférieurs au débit minimal compatible ST4539, typiquement 3200 b/s voire la version 1600 b/s bas débit ne seront sélectionnés que si on passe en mono-bande 3kHz à bas débit. En effet, dans le cas où l'on souhaite émettre sur plusieurs sous-porteuses de type « XL » on utilisera la forme d'onde 4539XL qui n'implémente pas des débits inférieurs à 1600 b/s sur une sous-bande de 3kHz.

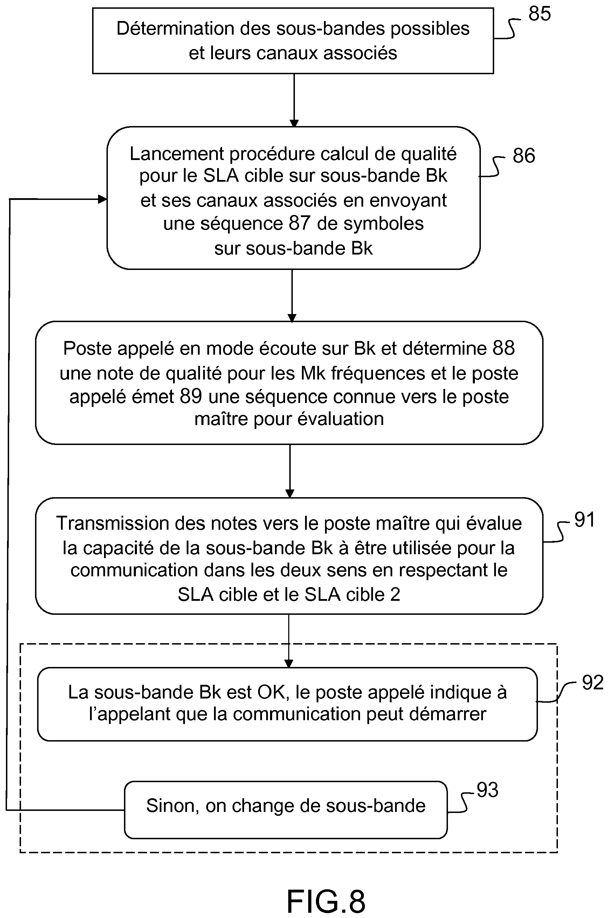

La figure 8 schématise au moyen de blocs les étapes mises en oeuvre par le procédé dans le cas de son application à une communication bidirectionnelle.

Par rapport au cas décrit dans le cadre d'une communication unidirectionnelle à la figure 6, les échanges sont doublés afin de permettre au poste maître d'évaluer les différents canaux Ci de chaque sous-bande testée. Au niveau de la décision de qualité, l'objectif est de permettre la transmission des deux débits, et donc d'avoir les deux niveaux de service ou SLAcible et SLAcible2 vérifiés. Dans le cas où un choix devrait être fait entre différentes sous-bandes ne permettant pas d'atteindre les qualités souhaitées, l'évaluation devra être faite sur la base d'une moyenne des débits atteints sur chacun des deux sens.

Dans un premier temps, le poste maître va définir un ensemble de sous-bandes possibles pour la communication.

Dans cette configuration, le poste appelé a là aussi en transmettant ses caractéristiques mais également une information sur son SLA cible2, 84b lorsqu'il a répondu en étape 2 après avoir détecté l'appel du poste maître.

Sur la base de ces informations, le poste maître détermine 85 des sous-bandes possibles et leurs canaux associés. Il peut aussi effectuer un ordonnancement en termes de débit possible pour le point de fonctionnement correspondant aux exigences de latence et de taux d'erreur cibles. Soit Bi les différentes sous-bandes ordonnées, avec i variant de 1 à p. Le poste maître ordonnance les sous-bandes en tenant compte des sens de communication, poste maître vers poste appelé, ou réciproquement, en termes de débit possible au point de fonctionnement, latence et taux d'erreur cibles.

Le poste maître déclenche la procédure 86 permettant de déterminer la première sous-bande de trafic à tester, la sous-bande B₁ et ses canaux f₁¹....... f_{M1}¹ et l'indique sur la fréquence de communication fj bande étroite de l'étape 2. Le poste appelé accuse réception de la confirmation de la communication sur la fréquence fj. Il passe en mode écoute, par exemple sur 200kHz sur la sous-bande B₁. Le poste appelé renvoie un message d'accord au poste maître pour un test sur B₁.

Le poste maître émet, 87, une première séquence de symboles connus sur la sous-bande B₁ vers le poste appelé. Le poste appelé, en écoute sur cette sous-bande B₁, va démoduler les M₁ fréquences de la sous-bande. Puis le poste appelé va comparer les symboles reçus à la séquence connue et va estimer, 88, les qualités sur les M₁ fréquences de la sous-bande et attribuer des notes de qualité Qi pour les M₁ fréquences. Le poste appelé envoie les informations de qualité correspondantes au poste maître. La transmission de ces informations s'effectue, par exemple, en mode bas débit entrelacé sur les M₁ fréquences ou sur une partie de ces fréquences, les meilleures mesurées au sens du poste appelé.

Le poste appelé transmet à son tour une deuxième séquence de symboles connus sur la sous-bande B1, afin d'évaluer la qualité de la liaison dans le sens poste appelé- poste maître, 89.

Le poste maître, sur réception des notes de qualité va évaluer, 90, la capacité de la sous-bande B₁ à répondre aux besoins des services dans les deux sens pour le SLA cible et le SLA cible 2.

Si la sous-bande B1 remplit les conditions requises pour le service alors la station maître avertit, 91, le poste appelé, en utilisant la sous-bande B₁ sélectionnée et la communication entre les deux postes peut commencer sur les n canaux sélectionnés au niveau de la sous-bande sélectionnée.

Dans le cas contraire, lorsque la sous-bande B₁ n'offre pas la capacité requise pour la communication, le procédé poursuit annonce à la station appelante qu'il considère la bande suivante Bᵢ₊₁ et pour les canaux associés. Le poste maître accuse réception et passe en écoute sur la nouvelle sous-bande. Le poste appelé accuse réception au poste maître et effectue des mesures de qualité pour cette sous-bande comme il a été décrit précédemment.

En cas de non réponse sur une sous-bande, le procédé bascule automatiquement du côté émetteur comme du côté récepteur à une sous-bande Bᵢ₊₁ du plan de fréquences.

Dans le cas d'un mode bidirectionnel à l'alternat sur des canaux différent en émission et en réception le chronogramme bidirectionnel reste valable mais le poste maître détermine une sélection de fréquences non moyennée pour les deux sens de transmission et peut également arriver à des emplois de canaux en nombre différents sur les deux sens de transmission. Cette application permet notamment de se prémunir des brouillages locaux.

### Maintien de la liaison ALM

Une sous-bande Bᵢ ayant été choisie, la procédure ALE selon l'invention est terminée et la sous-bande reste inchangée tant que la procédure ALE n'est pas relancée.

La figure 9 schématise un exemple d'intégration de la procédure ALE selon l'invention dans un schéma ALM.

Les modulations et donc les débits utilisés sur chaque canal peuvent varier dans le temps ou non, de même que les choix des canaux utilisés à l'intérieur de la sous-bande seront changés dynamiquement grâce à des messages d'ALM.

C'est le poste maître qui gère l'optimisation de l'usage de la bande, au vu des notes remontées en cours de communication par la station distante et éventuellement de sa propre analyse de la sous-bande lorsqu'elle est en réception.
100 - demande de service
101 - négociation ALE en exécutant par exemple les étapes E1, E2 et E3,
102 - transmission de données, avec toutes les X trames, relance de la procédure de gestion du débit, par exemple comme enseigné dans la proposition d'invention brevet du Demandeur FR 11.03084 « Procédé et système permettant l'allocation dynamique de puissance et/ou modulation dans un système comprenant n canaux »,
103 - l'étape suivante est une étape de calcul d'optimisation avec le choix des canaux et leur nombre, les schémas de modulation et de codage,
104 -la proposition de l'étape d'optimisation est-elle compatible du service recherché, alors
105 - la proposition de l'étape d'optimisation implique-t-elle un changement des canaux,
105a - si oui le poste maître prévient le poste appelé du changement par un message ALM 107 avant de passer, avec un délai pour amener la prise en compte de ce passage, à la transmission des données dans la nouvelle configuration de canaux,
105 b - sinon la proposition de l'étape d'optimisation n'implique pas de changement de canaux, alors les champs autobaud seuls seront modifiés pour indiquer le ou les nouveaux choix de modulation par canal et le changement peut donc être appliqué sans attente,
106 - dans le cas où la proposition de l'étape d'optimisation est incompatible avec le service recherché, alors on relance le procédé ALE selon l'invention au niveau de l'étape E1 ou au niveau de l'étape E3.

Ce mécanisme présente deux aspects :
1 - il assure la transmission des messages de changement des fréquences à écouter,
2 - il relance la procédure ALE lorsque le canal se dégrade trop au vu du service recherché.

L'ALM 4G est donc enrichi en terme de capacité pour intégrer une capacité préventive permettant d'une part des changements de fréquence dans la bande utile mais aussi de relancer la procédure de choix de bande avant que la communication ne soit trop dégradée via un mécanisme de protection lié à la qualité des canaux utilisables et au service qu'ils savent offrir en regard du service en cours.

En réglant ce seuil de compatibilité du service recherché avec une marge, on peut donc décider de relancer la procédure ALE avant de perdre totalement la communication, comme illustré en figure 9, ce qui peut permettre d'émettre un message de signalisation indiquant que l'on relance la procédure ALE: on propose d'envoyer un message véhiculant l'information de la sous-bande que l'on va tester pour l'ALE et ses fréquences cibles, multiplexée sur l'ensemble des canaux actifs au moment de la transmission et utilisés en bas débit, comme dans la procédure ALE standard illustrée en figure 6. Ceci permettra d'accélérer la procédure en évitant de repasser par la phase initiale de recherche d'une première fréquence bande étroite passante.

Pour les messages ALM de mise à jour des canaux sélectionnés, il est possible d'utiliser le même format que celui proposé pour le message de résultat de procédure ALE, à savoir un vecteur binaire des différents canaux présents dans le plan de fréquence pour la sous-bande considérée. Si la fréquence est sélectionnée, le bit est positionné à 1, sinon il est positionné à 0.

| Info ALM | Info ALM | C0 | C1 | C2 | C3 | ... | C_{M-1} | C_{M} |
|---|---|---|---|---|---|---|---|---|
| | | 0 | 1 | 0 | 0 | ... | 0 | 1 |

Une autre possibilité est de numéroter dans ce message les canaux de manière croissante en fonction de leur utilisation dans la sous-bande d'intérêt, au prix d'une signalisation plus coûteuse en débit.

Afin d'améliorer la procédure d'évaluation de la liaison, on propose d'inclure également dans l'ALM un mécanisme lent de sondage des canaux non utilisés en communication. Ce mécanisme reprend le principe utilisé dans la procédure ALE qui émet des données pseudo aléatoires à différents formats (600 b/s, 4800 b/s) afin d'évaluer les performances sur les différents canaux sondés avec l'égaliseur cible de la forme d'onde qui pourrait être utilisée. Afin de ne perturber qu'au minium la communication en cours, les données de sondage ne seront pas multiplexées avec les données utiles transmises, mais seront transmises en parallèle sur le canal bande étroite testé au moyen une porteuse spécifique véhiculant une trame semblable à celle décrite en figure 7 afin de ne pas dégrader la communication. L'émission large bande comportera en ce cas la fois les porteuses de données et la porteuse de sondage en une même émission. Les informations de qualité obtenue par ce sondage seront utilisées pour affiner l'estimation de qualité mesurée en réception par simple intégrale du bruit. Pour que ce sondage n'oblige pas à émettre systématiquement un message d'ALM indiquant le canal supplémentaire à écouter, on propose d'adapter un mécanisme simple comme suit : c'est le message ALE ou ALM qui indique le lancement du mécanisme de sondage, par exemple en utilisant deux bits 'Info ALM' positionnés en tête du message
- ▪ 2 bits (b₁..b₂) : mécanisme de sondage complémentaire
   - 0 : pas de sondage en cours (ou arrêt du sondage en cours)
   - 1 : lancement du sondage depuis la première fréquence du plan
   - 2 : lancement du sondage depuis la n/3 ème fréquence du plan
   - 3 : lancement du sondage depuis la 2n/3 ème fréquence du plan
- ▪ n bits (b₃..bₙ₊₂) : information d'utilisation en communication de chacune des n canaux du plan dans la sous-bande considérée (max : n canaux donc). Par défaut n=30.
   - Pour chaque bit : 0 : canal non utilisé / 1 : canal utilisé
Ce mécanisme pourra par exemple être lancé en réalisant une émission sur deux trames consécutives, avant changement à la fréquence suivante non utilisée dans le plan et ainsi de suite.
Les valeurs nb trames, vitesse changement... seront à valider par tests.

Le procédé et le système selon l'invention offrent la possibilité d'une prise de liaison et de maintien de liaison en large bande, qualifiant les canaux utilisés, mais permet aussi d'accélérer la prise de liaison pour des postes asynchrones et d'être compatible des postes existant.

L'invention offre notamment les avantages suivants :
- c'est une solution de prise de liaison large bande HF qui reste compatible des standards existants, sous réserve d'un choix sur le standard existant en question,
- elle permet une amélioration de la vitesse de prise de liaison entre tous les postes embarquant ce mécanisme ou ceux communiquant avec des postes « legacy » asynchrones ou des postes « legacy » synchrones acceptant la mise à jour des plans de fréquence par radio,
- elle permet une interaction efficace de l'ALM avec l'ALE par relance de l'ALE directement en phase 3,
- elle est applicable sans qu'il soit nécessaire de modifier le standard ALE existant, et donc sans rupture de l'interopérabilité avec des équipements non modifiés selon le procédé.
- en démarrant la communication dès qu'un jeu de ressources compatibles avec le besoin est trouvé, elle évite de devoir tester de très nombreuses configurations pour sélectionner la meilleure, ce qui n'est pas utile quand une configuration moins bonne permet néanmoins de fournir le service souhaité.

## Revendications

1. Système pour établir et maintenir une liaison « ALE », établissement de lien automatique, dans le cadre d'une communication large bande, ledit système comprenant au moins :
• un premier poste de communication maître (10) adapté à émettre un message pour l'établissement d'une communication avec un service cible souhaité « SLA », vers un poste appelé sur une fréquence fi, le premier poste comprenant un premier émetteur/récepteur radio (12) et un premier contrôleur (14), et dispose d'un ensemble de sous-bandes possibles pour la communication,
• un deuxième poste de communication appelé (11) en veille sur un plan de fréquences {f₁,...f_{M}} prédéfini et comprenant un deuxième émetteur/récepteur radio (16) et un deuxième contrôleur (17),
le système est **caractérisé en ce que** :
• le premier poste maître (10) est adapté à émettre une séquence test, Stest, connue sur une sous-bande Bk vers le deuxième poste appelé (11) dès que ledit deuxième poste appelé (11) acquitte le fait de passer en sondage pour déterminer la meilleure configuration à retenir pour l'établissement de la liaison,
• ledit deuxième contrôleur (17) du deuxième poste appelé (11) est adapté à déterminer des notes de qualité sur les Mk fréquences de la sous-bande Bk et à transmettre lesdites valeurs de qualité vers le premier poste maître,
• ledit premier poste maître (10) est adapté à déterminer à partir des notes de qualité, la capacité de la sous-bande Bk à répondre au service cible souhaité « SLA » demandé par la communication, et à sélectionner la sous-bande Bk représentant la capacité requise ou la meilleure note de qualité, à déterminer la sous-bande à utiliser pour la communication, à confirmer au deuxième poste de communication appelé la sous-bande sélectionnée ainsi que les sous-canaux retenus et à déclencher la communication avec ledit deuxième poste appelé (11).

2. Système selon la revendication 1 **caractérisé en ce que** la communication est bidirectionnelle et **en ce que** le deuxième poste (11) est adapté à émettre une deuxième séquence connue vers le premier poste maître (10), ledit poste maître étant adapté à évaluer la capacité d'une sous-bande Bk à répondre aux besoins du service cible souhaité SLAcible, et du service cible souhaité SLAcible2 dans le sens communication du poste maître vers le poste appelé et réciproquement.

3. Système selon la revendication 1 **caractérisé en ce que** ledit premier poste de communication maître (10) comprend des moyens (14) adaptés à déterminer un ensemble de fréquences dites fréquences d'appel f_{A} pour l'établissement d'une liaison en bande étroite entre le premier poste maître (10) et le deuxième poste (11) en tenant compte en fonction de contraintes en termes de débit demandé, latence maximale autorisée, point de fonctionnement du taux d'erreur cible, lesdites fréquences étant utilisées lors de la demande de communication.

4. Système selon la revendication 1 **caractérisé en ce que** le premier poste maître (10) comprend des moyens adaptés (14) à établir un lien de communication bande étroite entre le premier poste maître et le deuxième poste appelé, à vérifier la compatibilité du poste appelé avec le mode de communication 4G et à continuer la communication dans un mode compatible au poste appelé.

5. Système selon la revendication 1 **caractérisé en ce que** la séquence de test connue Stest est composée d'une trame comprenant un en-tête véhiculant l'adresse du poste appelé, une première série de symboles à moyen débit et une deuxième série de symboles à bas débit.

6. Système selon l'une des revendications 1 à 5 **caractérisé en ce que** le système de communication est un système large bande en Haute Fréquences et **en ce que** le premier et le deuxième poste sont des postes hautes fréquences HF.

7. Procédé de prise de liaison « ALE »,établissement de lien automatique, large bande et de maintien de liaison entre un premier poste de communication maître (10) et un deuxième poste de communication appelé (11), exécuté au sein d'un système selon l'une des revendications 1 à 6 **caractérisé en ce qu'**il comprend au moins les étapes suivantes :
• Le deuxième poste de communication (11) appelé est en veille sur un plan de fréquences {f₁,...f_{M}} prédéfini,
• Le premier poste de communication maître (10) émet un message de demande de communication vers le poste appelé sur une fréquence fi et attend son acquittement de détection d'appel,
• Le premier poste de communication maître (10) dispose d'un ensemble de sous-bandes possibles pour la communication,
• Le premier poste de communication maître (10) démarre la procédure de calcul de qualité des canaux en transmettant une séquence de test connue vers ledit deuxième poste de communication appelé, ledit poste de communication appelé (11) détermine les notes de qualité sur les Mk fréquences de la sous-bande Bk, puis transmet ces valeurs au poste de communication maître (10),
• Le poste de communication maître détermine à partir de ces notes de qualité, la capacité de la sous-bande Bk à répondre au service cible souhaité « SLA », et
• sélectionne ladite sous-bande si elle permet de répondre au service cible « SLA » demandé par la communication, ou
• réitère les étapes de recherche de sous-bande en sélectionnant une nouvelle sous-bande Bk, ou bien
• dans le cas où il ne reste plus de sous-bandes permettant d'atteindre une qualité supérieure à la meilleure qualité trouvée sur les sous-bandes testées précédemment, élit la sous-bande présentant la note de qualité la meilleure,
• Le poste de communication maître détermine la sous-bande à utiliser pour la communication, confirme au poste de communication appelé la sous-bande sélectionnée ainsi que les sous-canaux retenus et démarre la communication.

8. Procédé selon la revendication 7 **caractérisé en ce qu'**il comporte une étape de détermination des sous-bandes possibles de la manière suivante : une fois que le poste appelé a validé la détection d'appel, sur la fréquence fi, ledit poste appelé transmet ses informations de qualités de plan de fréquence et ses caractéristiques postes, et ledit poste maître détermine les sous-bandes possibles.

9. Procédé selon l'une des revendications 7 ou 8 **caractérisé en ce que** la communication est une communication bidirectionnelle et **en ce qu'**il comporte au moins les étapes suivantes : lors de la transmission des notes de qualité obtenues par le deuxième poste appelé pour une sous-bande Bk, le deuxième poste appelé transmet une deuxième séquence connue vers le poste maître, ledit poste maître évalue alors la capacité d'une sous-bande Bk à répondre aux besoins des services cibles souhaités « SLAcible », « SLAcible2 » dans le sens communication du poste maître vers le poste appelé et réciproquement.

10. Procédé selon la revendication 7 **caractérisé en ce que** la note de qualité d'un canal est évaluée par un poste recevant une séquence test en estimant le débit que le poste saura recevoir sur le canal considéré.

11. Procédé selon l'une des revendications 7 ou 8 **caractérisé en ce que**, dans le cas où l'on ne trouve pas de sous-bandes vérifiant la qualité requise pour la communication, le procédé sélectionne la bande présentant la meilleure note de qualité et actualise les notes des différents canaux par la valeur la plus récente testée.

12. Procédé selon la revendication 7 **caractérisé en ce qu'**il comporte une étape d'initialisation de liaison en bande étroite vérifiant la compatibilité du mode de communication entre le poste maître et le poste appelé et **en ce qu'**il continue la communication avec le mode compatible trouvé ou termine la demande de communication.

13. Procédé selon la revendication 7 **caractérisé en ce qu'**il comporte une étape d'initialisation de liaison utilisant un poste appelé large bande adapté à surveiller plusieurs fréquences en même temps.

14. Procédé selon la revendication 7 **caractérisé en ce qu'**il utilise comme séquence de test un message sous forme d'une trame composée d'un premier en-tête contenant l'adresse du poste appelé, suivi d'une première série de symboles à moyen débit et d'une deuxième série de symboles à bas débit.

15. Procédé selon la revendication 13 **caractérisé en ce que** les symboles utilisés sont choisis parmi la liste suivante : PSK, QAM.

16. Procédé selon la revendication 7 **caractérisé en ce que** la communication entre le poste maître et le poste appelé étant établie, alors l'information transmise est transmise multiplexée sur l'ensemble des voies.

17. Procédé selon l'une des revendications 7 à 16 **caractérisé en ce que** l'on utilise une bande de communication large bande haute fréquence HF.

## Patentansprüche

1. System zum Einrichten und Führen einer "ALE"-(Automatic Link Establishment)-Link im Kontext einer Breitbandkommunikation, wobei das System wenigstens Folgendes umfasst:
• eine erste Master-Kommunikationsstation (10), ausgelegt zum Senden einer Nachricht zum Einrichten einer Kommunikation mit einem gewünschten "SLA"-Zielservice zu einer auf einer Frequenz fi gerufenen Station, wobei die erste Station einen ersten Radiosender/-empfänger (12) und eine erste Steuerung (14) umfasst und einen Satz von möglichen Subbändern für die Kommunikation hat;
• eine zweite gerufene Kommunikationsstation (11) in Bereitschaft auf einem vordefinierten Frequenzplan {f₁,...f_{M}}, die einen zweiten Radiosender/-empfänger (16) und eine zweite Steuerung (17) umfasst,
wobei das System **dadurch gekennzeichnet ist, dass**:
• die erste Master-Station (10) zum Senden einer bekannten Testsequenz Stest auf einem Subband Bk zu der zweiten gerufenen Station (11) ausgelegt ist, sobald die zweite gerufene Station (11) bestätigt, dass sie in den Sondierungsmodus umgeschaltet hat, um die für das Einrichten der Link zu beibehaltene beste Konfiguration zu bestimmen;
• die zweite Steuerung (17) der zweiten gerufenen Station (11) zum Bestimmen von Qualitätsbewertungen auf den Mk Frequenzen des Subbandes Bk und zum Senden der Qualitätswerte zu der ersten Master-Station ausgelegt ist;
• die erste Master-Station (10) zum Bestimmen, auf der Basis der Qualitätsbewertungen, der Kapazität des Subbandes Bk zum Antworten auf den durch die Kommunikation angeforderten gewünschten "SLA"-Zielservice ausgelegt ist, und zum Wählen des Subbandes Bk, das die benötigte Kapazität oder die beste Qualitätsbewertung repräsentiert, zum Bestimmen des für die Kommunikation zu benutzenden Subbandes, zum Bestätigen, der zweiten gerufenen Kommunikationsstation, des gewählten Subbandes sowie der beibehaltenen Subkanäle und zum Auslösen der Kommunikation mit der zweiten gerufenen Station (11).

2. System nach Anspruch 1, **dadurch gekennzeichnet, dass** die Kommunikation bidirektional ist, und dadurch, dass die zweite Station (11) zum Senden einer zweiten bekannten Sequenz zu der ersten Master-Station (10) ausgelegt ist, wobei die Master-Station zum Beurteilen der Kapazität eines Subbandes Bk zum Antworten auf die Anforderungen des gewünschten Zielservice SLAtarget und des gewünschten Zielservice SLAtarget2 in der Kommunikationsrichtung von der Master-Station zur gerufenen Station und umgekehrt ausgelegt ist.

3. System nach Anspruch 1, **dadurch gekennzeichnet, dass** die erste Master-Kommunikationsstation (10) Mittel (14) umfasst, ausgelegt zum Bestimmen eines Satzes von Frequenzen, Ruffrequenzen f_{A} genannt, zum Einrichten einer Schmalband-Link zwischen der ersten Master-Station (10) und der zweiten Station (11) unter Berücksichtigung von, gemäß Beschränkungen in Bezug auf die angeforderte Bitrate, maximaler zulässiger Latenz, Betriebspunkt der Zielfehlerrate, Frequenzen, die bei der Kommunikationsanforderung benutzt werden.

4. System nach Anspruch 1, **dadurch gekennzeichnet, dass** die erste Master-Station (10) Mittel (14) umfasst, die ausgelegt sind zum Einrichten einer Schmalband-Kommunikationslink zwischen der ersten Master-Station und der zweiten gerufenen Station, zum Verifizieren der Kompatibilität der gerufenen Station mit dem 4G-Kommunikationsmodus und zum Fortsetzen der Kommunikation in einem Modus, der mit der gerufenen Station kompatibel ist.

5. System nach Anspruch 1, **dadurch gekennzeichnet, dass** die bekannte Testsequenz Sₜₑₛₜ aus einem Frame besteht, der einen Header umfasst, der die Adresse der gerufenen Station, eine erste Serie von mittleren Bitratensymbolen und eine zweite Serie von tiefen Bitratensymbolen führt.

6. System nach einem der Ansprüche 1 bis 5, **dadurch gekennzeichnet, dass** das Kommunikationssystem ein Hochfrequenz-Breitbandsystem ist, und dadurch, dass die erste und die zweite Stationen Hochfrequenzstationen HF sind.

7. Verfahren zum Einrichten einer Breitband-"ALE"-(Automatic Link Establishment)-Link und zum Führen einer Link zwischen einer ersten Master-Kommunikationsstation (10) und einer zweiten gerufenen Kommunikationsstation (11), ausgeführt innerhalb eines Systems nach einem der Ansprüche 1 bis 6, **dadurch gekennzeichnet, dass** es die folgenden Schritte beinhaltet:
• die zweite gerufene Kommunikationsstation (11) ist in Bereitschaft auf einem vordefinierten Frequenzplan {f₁,...f_{M}};
• die erste Master-Kommunikationsstation (10) sendet eine Kommunikationsanforderungsnachricht zu der gerufenen Station auf einer Frequenz fi und wartet auf ihre Ruferkennungsbestätigung;
• die erste Master-Kommunikationsstation (10) hat einen Satz von möglichen Subbändern für die Kommunikation;
• die erste Master-Kommunikationsstation (10) startet das Kanalqualitätsberechnungsverfahren durch Senden einer bekannten Testsequenz zu der zweiten gerufenen Kommunikationsstation, die gerufene Kommunikationsstation (11) bestimmt die Qualitätsbewertungen auf den Mk Frequenzen des Subbandes Bk und sendet diese Werte dann zur Master-Kommunikationsstation (10);
• die Master-Kommunikationsstation bestimmt auf der Basis dieser Qualitätsbewertungen die Kapazität des Subbandes Bk, auf den gewünschten "SLA"-Zieldienst zu antworten, und
• wählt das Subband, wenn es eine Antwort auf den durch die Kommunikation angeforderten "SLA"-Zielservice zulässt; oder
• wiederholt die Schritte des Suchens eines Subbandes durch Wählen eines neuen Subbandes Bk; oder auch
• wählt, falls es keine Subbänder mehr gibt, die die Erzielung einer besseren Qualität als die beste Qualität zulassen, die in den zuvor getesteten Subbändern gefunden wurde, das Subband mit der besten Qualitätsbewertung;
• die Master-Kommunikationsstation bestimmt das für die Kommunikation zu verwendende Subband, bestätigt der gerufenen Kommunikationsstation das gewählte Subband sowie die beibehaltenen Subkanäle und startet die Kommunikation.

8. Verfahren nach Anspruch 7, **dadurch gekennzeichnet, dass** es einen Schritt des Bestimmens von möglichen Subbändern wie folgt beinhaltet: sobald die gerufene Station die Ruferkennung auf der Frequenz fi bestätigt hat, sendet die gerufene Station ihre Frequenzplanqualitätsinformation und ihre Stationscharakteristiken und die Master-Station bestimmt die möglichen Subbänder.

9. Verfahren nach Anspruch 7 oder 8, **dadurch gekennzeichnet, dass** die Kommunikation eine bidirektionale Kommunikation ist, und dadurch, dass es wenigstens die folgenden Schritte beinhaltet: Senden durch die zweite gerufene Station, beim Senden von Qualitätsbewertungen, die von der zweiten gerufenen Station für ein Subband Bk erhalten wurden, einer zweiten bekannten Sequenz zu der Master-Station, dann Beurteilen, durch die Master-Station, der Kapazität eines Subbandes Bk zum Antworten auf die Anforderungen der gewünschten Zielservices "SLAtarget", "SLAtarget2" in der Kommunikationsrichtung von der Master-Station zu der gerufenen Station und umgekehrt.

10. Verfahren nach Anspruch 7, **dadurch gekennzeichnet, dass** die Qualitätsbewertung eines Kanals durch eine Station beurteilt wird, die eine Testsequenz erhält, durch Schätzen der Bitrate, die die Station auf dem betrachteten Kanal empfangen kann.

11. Verfahren nach Anspruch 7 oder 8, **dadurch gekennzeichnet, dass** in dem Fall, dass keine Subbänder gefunden werden, die die für die Kommunikation benötigte Qualität verifizieren, das Verfahren das Band mit der besten Qualitätsbewertung auswählt und die Bewertungen der verschiedenen Kanäle mit dem zuletzt getesteten Wert aktualisiert.

12. Verfahren nach Anspruch 7, **dadurch gekennzeichnet, dass** es einen Schritt des Initialisierens einer Schmalband-Link umfasst, die die Kompatibilität des Kommunikationsmodus zwischen der Master-Station und der gerufenen Station verifiziert, und dadurch, dass es die Kommunikation mit dem gefundenen kompatiblen Modus fortsetzt oder die Kommunikationsanforderung terminiert.

13. Verfahren nach Anspruch 7, **dadurch gekennzeichnet, dass** es einen Schritt des Initialisierens einer Link mittels einer gerufenen Breitbandstation beinhaltet, ausgelegt zum Überwachen von mehreren Frequenzen gleichzeitig.

14. Verfahren nach Anspruch 7, **dadurch gekennzeichnet, dass** es als Testsequenz eine Nachricht in Form eines Frame bestehend aus einem ersten Header benutzt, der die Adresse der gerufenen Station, gefolgt von einer ersten Serie von mittleren Bitratensymbolen und einer zweiten Serie von tiefen Bitratensymbolen enthält.

15. Verfahren nach Anspruch 13, **dadurch gekennzeichnet, dass** die benutzten Symbole aus der Liste PSK, QAM ausgewählt sind.

16. Verfahren nach Anspruch 7, **dadurch gekennzeichnet, dass**, wenn die Kommunikation zwischen der Master-Station und der gerufenen Station aufgebaut ist, die gesendeten Informationen auf gemultiplexte Weise auf allen Kanälen gesendet werden.

17. Verfahren nach einem der Ansprüche 7 bis 16, **dadurch gekennzeichnet, dass** ein Hochfrequenz-HF-Breitbandkommunikationsband benutzt wird.

## Claims

1. A system for establishing and maintaining an "ALE" (Automatic Link Establishment) link within the context of a broadband communication, said system comprising at least:
• one first master communication station (10) designed to transmit a message to establish a communication with a desired "SLA" target service to a station called on a frequency fi, said first station comprising a first radio transceiver (12) and a first controller (14) and having a set of possible sub-bands for the communication;
• a second called communication station (11) on standby on a predefined frequency plan {f₁,...f_{M}} and comprising a second radio transceiver (16) and a second controller (17),
said system being **characterised in that**:
• said first master station (10) is designed to transmit a known test sequence, Stest, on a sub-band Bk to said second called station (11) as soon as said second called station (11) acknowledges that it has switched to probing mode to determine the best configuration to be retained for establishing the link;
• said second controller (17) of said second called station (11) is designed to determine quality scores on the Mk frequencies of the sub-band Bk and to transmit said quality values to said first master station;
• said first master station (10) is designed to determine, on the basis of the quality scores, the capacity of the sub-band Bk to respond to the desired "SLA" target service requested by the communication, and to select the sub-band Bk representing the required capacity or the best quality score, to determine the sub-band to be used for the communication, to confirm, to said second called communication station, the selected sub-band and the sub-channels retained and to trigger the communication with said second called station (11).

2. The system according to claim 1, **characterised in that** the communication is bidirectional and **in that** said second station (11) is designed to transmit a second known sequence to said first master station (10), said master station being designed to evaluate the capacity of a sub-band Bk to respond to the requirements of the desired target service SLAtarget and of the desired target service SLAtarget2 in the direction of communication from said master station to said called station and vice versa.

3. The system according to claim 1, **characterised in that** said first master communication station (10) comprises means (14) adapted to determine a set of frequencies, called call frequencies f_{A}, to establish a narrowband link between said first master station (10) and said second station (11), whilst taking into account, according to constraints in terms of requested bitrate, maximum permitted latency, operating point of the target error rate, said frequencies being used during the communication request.

4. The system according to claim 1, **characterised in that** said first master station (10) comprises means (14) adapted to establish a narrowband communication link between said first master station and said second called station, to verify the compatibility of the called station with the 4G communication mode and to continue the communication in a mode that is compatible with the called station.

5. The system according to claim 1, **characterised in that** said known test sequence Sₜₑₛₜ is made up of a frame comprising a header carrying the address of said called station, a first series of medium bitrate symbols and a second series of low bitrate symbols.

6. The system according to any one of claims 1 to 5, **characterised in that** said communication system is a high-frequency broadband system and **in that** said first and second stations are high frequency stations HF.

7. Method for setting up a broadband "ALE" (Automatic Link Establishment) link and for maintaining a link between a first master communication station (10) and a second called communication station (11), executed within a system according to any one of claims 1 to 6, **characterised in that** it comprises at least the following steps:
• said second called communication station (11) is on standby on a predefined frequency plan {f₁,...f_{M});
• said first master communication station (10) transmits a communication request message to said called station on a frequency fi and waits for its acknowledgement of call detection;
• said first master communication station (10) has a set of possible sub-bands for the communication;
• said first master communication station (10) starts the channel quality computation procedure by transmitting a known test sequence to said second called communication station, said called communication station (11) determines the quality scores on the Mk frequencies of the sub-band Bk, then transmits these values to said master communication station (10);
• said master communication station determines, on the basis of these quality scores, the capacity of the sub-band Bk to respond to the desired "SLA" target service, and
• selects said sub-band if it allows a response to the "SLA" target service requested by the communication; or
• repeats the steps of research of a sub-band by selecting a new sub-band Bk; or else
• elects, in the event that there are no longer any sub-bands that allow better quality to be achieved than the best quality found on the previously tested sub-bands, the sub-band with the best quality score;
• said master communication station determines the sub-band to be used for the communication, confirms the selected sub-band and the sub-channels retained to the called communication station and starts the communication.

8. The method according to claim 7, **characterised in that** it comprises a step of determining possible sub-bands as follows: once said called station has confirmed the call detection, on the frequency fi, said called station transmits its frequency plan quality information and its station characteristics and said master station determines the possible sub-bands.

9. The method according to any one of claims 7 or 8, **characterised in that** the communication is a bidirectional communication and **in that** it comprises at least the following steps: when transmitting quality scores obtained by said second called station for a sub-band Bk, said second called station transmits a second known sequence to said master station, said master station then assesses the capacity of a sub-band Bk to respond to the requirements of the desired target services "SLAtarget", "SLAtarget2" in the direction of communication from said master station to said called station and vice versa.

10. The method according to claim 7, **characterised in that** the quality score of a channel is assessed by a station receiving a test sequence by estimating the bitrate that the station will be able to receive on the considered channel.

11. The method according to any one of claims 7 or 8, **characterised in that**, in the case that no sub-bands are found that verify the quality required for the communication, said method selects the band with the best quality score and updates the scores of the various channels using the most recently tested value.

12. The method according to claim 7, **characterised in that** it comprises a step of initialising a narrowband link verifying the compatibility of the communication mode between said master station and said called station and **in that** it continues the communication with the found compatible mode or terminates the communication request.

13. The method according to claim 7, **characterised in that** it comprises a step of initialising a link using a called broadband station designed to monitor a plurality of frequencies at the same time.

14. The method according to claim 7, **characterised in that** it uses, as a test sequence, a message in the form of a frame made up of a first header containing the address of said called station, followed by a first series of medium bitrate symbols and a second series of low bitrate symbols.

15. The method according to claim 13, **characterised in that** the symbols used are selected from the following list: PSK, QAM.

16. The method according to claim 7, **characterised in that**, with the communication between said master station and said called station being established, the transmitted information is then transmitted in a multiplexed manner on all of the channels.

17. The method according to any one of claims 7 to 16, **characterised in that** a high frequency HF broadband communication band is used.
